(19) Europäisches Patentamt / European Patent Office / Office européen des brevets

(11) **EP 3 330 816 A1**

(12) **EUROPÄISCHE PATENTANMELDUNG**

(43) Veröffentlichungstag:
06.06.2018 Patentblatt 2018/23

(51) Int Cl.:
*G05B 19/418* (2006.01)

(21) Anmeldenummer: **16202223.0**

(22) Anmeldetag: **05.12.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder: **Verma, Amit**
**91058 Erlangen (DE)**

(54) **VERFAHREN ZUR SOFTWAREAKTUALISIERUNG BEI CLOUD-GATEWAYS, COMPUTERPROGRAMM MIT EINER IMPLEMENTATION DES VERFAHRENS UND VERARBEITUNGSEINHEIT ZUR AUSFÜHRUNG DES VERFAHRENS**

(57) Die Erfindung ist ein Verfahren und ein Computerprogramm (40) mit einer Implementation des Verfahrens zur Softwareaktualisierung einer Mehrzahl von Cloud-Gateways (20-24), über welche Automatisierungslösungen (12-16) an die Cloud (10) angeschlossen sind, wobei eine Rangfolge der Cloud-Gateways (20-24) entsprechend einem Gefahrenpotenzial der angeschlossenen Automatisierungslösungen (12-16) ermittelt wird, wobei das Updaten mit dem Cloud-Gateway (20-24) oder einer Gruppe von Cloud-Gateways (20-24) mit dem geringsten Gefahrenpotenzial beginnt, wobei der Erfolg des im vorangehenden Schritt erfolgten Updates überprüft wird, bevor das Updaten fortgesetzt wird, wobei das Updaten mit einem Cloud-Gateway (20-24) oder einer Gruppe von Cloud-Gateways (20-24) mit dem nächsthöheren Gefahrenpotenzial fortgesetzt wird, wenn in dem Schritt zum Überprüfen des Erfolgs des vorangehenden Updates ermittelt wurde, dass das Update fehlerfrei erfolgt ist, oder das Updaten insgesamt abgebrochen wird, wenn in dem Schritt zum Überprüfen des Erfolgs des vorangehenden Updates ermittelt wurde, dass das Update nicht fehlerfrei erfolgt ist, und wobei die Schritte des Überprüfens des Erfolgs des vorangehenden Updates und des Fortsetzen des Updatens solange wiederholt werden, bis das Update auch für das Cloud-Gateway (20-24) oder eine Gruppe von Cloud-Gateways (20-24) mit dem höchsten Gefahrenpotenzial erfolgt ist.

FIG 2

EP 3 330 816 A1

**Beschreibung**

Die Erfindung betrifft zuvorderst ein Verfahren zur Softwareaktualisierung bei Cloud-Gateways. Die Erfindung betrifft im Weiteren ein Computerprogramm mit einer Implementation des Verfahrens sowie eine Verarbeitungseinheit, zum Beispiel in Form eines Rechnerknotens in der Cloud, zur Ausführung des Verfahrens.

Die Verwendung von Cloud-Diensten wird mehr und mehr üblich und zwar auch für sogenannte IIoT-Anwendungen (IIoT = Industrial Internet of Things). In diesem technischen Kontext sind zum Beispiel Sensoren und Aktoren, Automatisierungsgeräte, zum Beispiel speicherprogrammierbare Steuerungen, dezentrale Feldgeräte und dergleichen, oder gesamte Automatisierungssysteme, zum Beispiel in Form eines Netzwerks der vorgenannten Automatisierungsgeräte sowie angeschlossener Sensorik und Aktorik, mit der Cloud über im Folgenden kurz als Gateways bezeichnete sogenannte Cloud-Gateways verbunden. Bei einem solchen Gateway handelt es sich um ein insbesondere am Ort der jeweiligen Automatisierungslösung installiertes Modul oder Gerät, welches die Schnittstelle zwischen den zur Automatisierungslösung gehörigen Funktionseinheiten (Sensoren, Aktoren, Automatisierungsgeräte, Maschinen, Aggregate und Anlagen oder Anlagenteile der Automatisierungslösung usw.) oder einer Gruppe derartiger Funktionseinheiten und der Cloud bildet. Das Gateway sammelt die Daten von Funktionseinheiten der vorgenannten Art und leitet diese an eine jeweilige Cloud-Plattform mit Automatisierungsfunktionen/Automatisierungsdiensten weiter. Im Zusammenhang mit einer solchen Weiterleitung kann eine optionale Vorverarbeitung der Daten und/oder eine Verschlüsselung der Daten erfolgen. Mittels des Gateways kann auch ein geschlossener Regelkreis gebildet sein, wenn die Regelungsfunktion als Dienst in der Cloud implementiert ist und im Rahmen der Regelung aus der Automatisierungslösung stammende Daten verarbeitet und innerhalb der Cloud als Regelgröße oder Regelgrößen für eine Funktionseinheit der Automatisierungslösung bestimmte Daten erzeugt werden.

Jedes Gateway fungiert als eigenständige Schnittstelle zwischen einer jeweiligen Automatisierungslösung zur Steuerung und/oder Überwachung eines technischen Prozesses oder einer Gruppe einzelner Funktionseinheiten einer Automatisierungslösung und der Cloud. Zur Nutzung von IIoT-Diensten ist eine Automatisierungslösung über zumindest ein Gateway oder eine Gruppe von Gateways mit der Cloud verbunden. Bei einer Vielzahl von mit der Cloud verbundenen Automatisierungslösungen resultiert entsprechend auch eine Vielzahl von Gateways. Im Sinne einer sprachlichen Vereinfachung, aber ohne Verzicht auf eine weitergehende Allgemeingültigkeit, wird die nachfolgende Beschreibung auf Basis jeweils genau eines Gateways für eine Automatisierungslösung, welches gewissermaßen "seine" jeweilige Automatisierungslösung mit der Cloud verbindet, fortgesetzt.

Ein als Gateway im oben genannten Sinne fungierendes Gerät ist in geeigneter Weise mit dem Internet verbunden und über das Internet erfolgt in grundsätzlich an sich bekannter Art und Weise die Verbindung mit der jeweiligen Cloud-Plattform und dort vorgehaltenen IIoT-Diensten. Die Verbindung mit dem Internet bedeutet allerdings ein nicht unerhebliches Sicherheitsrisiko. Dieses ist nicht nur auf das Gateway selbst beschränkt, sondern erstreckt sich auch auf die jeweilige Automatisierungslösung, denn bei einem Ausfall oder einer Fehlfunktion des Gateways ist unmittelbar auch die Automatisierungslösung betroffen. Die Angreifbarkeit eines Gateways über das Internet kann daher auch für einen Angriff auf die mit dem Gateway jeweils verbundene Automatisierungslösung genutzt werden. Aus diesem Grunde sind Funktions- oder Sicherheitsaktualisierungen und dergleichen - im Folgenden zusammenfassend als Softwareaktualisierung oder kurz als Update bezeichnet - der Systemsoftware des Gateways von immenser Bedeutung.

Updates der oben genannten Art stellen allerdings auch selbst ein grundsätzliches Risiko für die ordnungsgemäße Funktion eines Gateways dar. Bei einem fehlerhaften Update oder einem fehlgeschlagenen Update ist die ordnungsgemäße Funktion des Gateways oftmals nicht mehr gegeben. Dies beeinträchtigt in der Folge auch die Funktion der angeschlossenen Automatisierungslösung oder stellt deren Funktion sogar vollständig infrage. Fehlfunktionen des Gateways aufgrund eines fehlerhaften oder fehlgeschlagenen Updates können zur Folge haben, dass mittels des Gateways übermittelte Daten nicht mehr oder nicht mehr in ordnungsgemäßer Form zur Verfügung stehen. Dies oder andere aufgrund eines fehlerhaften oder fehlgeschlagenen Updates resultierende Fehler können zu Fehlfunktionen in der Automatisierungslösung oder einem nicht definierten Verhalten der Automatisierungslösung mit potenziell desaströsen Ergebnis führen.

Derzeit wird bei einem Software-Update für ein Cloud-Gateway oder eine Mehrzahl von Cloud-Gateways die Art der angeschlossenen und über das jeweilige Cloud-Gateway mit der Cloud verbundenen Geräte nicht berücksichtigt. Damit kann bei einem Software-Update nicht in Betracht gezogen werden, welches Risiko sich eventuell ergibt, wenn ein Software-Update scheitert.

Eine Aufgabe der vorliegenden Erfindung besteht damit darin, eine Lösung für dieses Problem anzugeben.

Diese Aufgabe wird erfindungsgemäß mittels eines Verfahrens zur Softwareaktualisierung einer Mehrzahl von Cloud-Gateways (Gateways) mit den Merkmalen des Anspruchs 1 gelöst. Dazu sind bei einem Verfahren zur Softwareaktualisierung (Update) einer Mehrzahl von Gateways, wobei über die Gateways Automatisierungslösungen an die Cloud angeschlossen sind, folgende Schritte vorgesehen:

In einem ersten Schritt wird eine Rangfolge der Gateways entsprechend einem Gefahrenpotenzial der oder jeder an die Gateways angeschlossenen Automatisierungslösung ermittelt.

In einem zweiten Schritt erfolgt das Update des Gateways oder einer Gruppe von Gateways mit dem geringsten Gefahrenpotenzial.

In einem dritten Schritt wird der Erfolg des im vorangehenden zweiten Schritt erfolgten Updates überprüft.

In einem vierten Schritt wird das Updaten mit einem Gateway oder einer Gruppe von Gateways mit dem nächsthöheren Gefahrenpotenzial fortgesetzt, wenn in dem dritten Schritt zum Überprüfen des Erfolgs des vorangehenden Updates ermittelt wurde, dass das Update fehlerfrei erfolgt ist, oder das Updaten abgebrochen, wenn in dem dritten Schritt zum Überprüfen des Erfolgs des vorangehenden Updates ermittelt wurde, dass das Update nicht fehlerfrei erfolgt ist.

Wenn in dem dritten Schritt zum Überprüfen des Erfolgs des vorangehenden Updates ermittelt wurde, dass das Update fehlerfrei erfolgt ist und anschließend entsprechend der vierte Schritt ausgeführt wurde, werden danach der dritte und der vierte Schritt wiederholt und das Updaten so lange fortgesetzt, bis das Update auch für das Gateway oder eine Gruppe von Gateways mit dem höchsten Gefahrenpotenzial erfolgt ist oder das Updaten zwischenzeitlich aufgrund eines nicht fehlerfreien Updates abgebrochen wurde.

Der Vorteil des hier vorgeschlagenen Verfahrens besteht darin, dass das Update entsprechend der ermittelten Rangfolge der Gateways mit dem Gateway oder einer Gruppe von Gateways mit dem geringsten Gefahrenpotenzial beginnt. Sollten dabei Fehler auftreten, betrifft dies Gateways mit einem höheren Gefahrenpotenzial und vor allem auch deren Automatisierungslösungen nicht. Bei einem Abbruch des Verfahrens aufgrund eines fehlgeschlagenen Updates kann die Fehlerursache ermittelt und bereinigt werden und das Verfahren zu einem späteren Zeitpunkt erneut ausgeführt werden, bis schließlich das Update für alle Gateways und darunter auch das Gateway oder eine Gruppe von Gateways mit dem höchsten Gefahrenpotenzial erfolgreich ausgeführt wurde.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche sowie der Beschreibung bei einer näheren Konkretisierung eines Merkmals in einem nachgeordneten Anspruch davon auszugehen, dass eine derartige Beschränkung in den jeweils vorangehenden Ansprüchen sowie einer allgemeineren Ausführungsform des gegenständlichen Verfahrens zum sicheren Verbinden von Geräten mit der sogenannten Cloud nicht vorhanden ist. Jede Bezugnahme in der Beschreibung auf Aspekte nachgeordneter Ansprüche ist demnach auch ohne speziellen Hinweis ausdrücklich als Beschreibung optionaler Merkmale zu lesen.

Allgemein ergibt sich die Rangfolge der Gateways anhand des zu ermittelnden Gefahrenpotenzials der jeweils angeschlossenen Automatisierungslösung. Bei einer Ausführungsform des Verfahrens wird zum Ermitteln des Gefahrenpotenzials der einzelnen Automatisierungslösungen das Gefahrenpotenzial von zu den einzelnen Automatisierungslösungen gehörenden Funktionseinheiten (Assets) betrachtet. Demgemäß wird bei einer Ausführungsform des Verfahrens beim Ermitteln einer Rangfolge der Gateways entsprechend einem Gefahrenpotenzial der oder jeder an die Gateways angeschlossenen Automatisierungslösung ein Gefahrenpotenzial der zu einer Automatisierungslösung gehörenden Funktionseinheiten (Assets) berücksichtigt. Dieses wiederum wird anhand von vorgegebenen oder vorgebbaren Daten einer in der Cloud vorgehaltenen Datenbank (Asset-Meta-Datenbank) ermittelt. Eine solche Datenbank ermöglicht eine dynamische Anpassung der bei der Ermittlung des Gefahrenpotenzials berücksichtigten Daten. Die Anpassung kann zum Beispiel durch einen Betreiber einer jeweiligen Automatisierungslösung und/oder den Betreiber der Cloud-Plattform erfolgen.

Bei einer besonderen Ausführungsform des für die Ermittlung des Gefahrenpotenzials auf einer solchen Datenbank basierenden Verfahrens gehört zu den Daten in der Datenbank ein Schätzwert bezüglich des Gefahrenpotenzials der jeweiligen Funktionseinheit (Asset). Auf diese Weise kann zum Beispiel bei der Inbetriebnahme einer Automatisierungslösung ein von der jeweiligen Automatisierungslösung abhängiger Wert für das Gefahrenpotenzial angegeben werden, denn zum Beispiel ein Temperaturregler kann sowohl relativ unkritische Funktionen wie auch sicherheitsrelevante Funktionen erfüllen. Die Möglichkeit einer Eingabe eines Schätzwerts durch einen Programmierer, einen Inbetriebnehmer oder einen Betreiber der jeweiligen Automatisierungslösung ermöglicht demnach eine besonders einfache Berücksichtigung der tatsächlichen Verhältnisse der jeweiligen Automatisierungslösung.

Bei einer weiteren Ausführungsform des Verfahrens wird beim Ermitteln einer Rangfolge der Gateways entsprechend einem Gefahrenpotenzial der oder jeder an die Gateways angeschlossenen Automatisierungslösung alternativ oder zusätzlich ein Betriebszustand der zu einer Automatisierungslösung gehörenden Funktionseinheiten (Assets) berücksichtigt. Auf diese Weise kann zum Beispiel das Gefahrenpotenzial eines Gateways mit einer oder zumindest einer potenziell äußerst kritischen Automatisierungslösung sinken, wenn diese zum Beispiel nicht in Betrieb ist. Die Berücksichtigung des Betriebszustands erlaubt eine Anpassung des Verfahrens nicht nur an die durch eine Kategorisierung der Automatisierungslösungen und der davon umfassten Funktionseinheiten ausgedrückten statischen Verhält-

3

nisse, sondern auch an die momentanen Gegebenheiten, also zum Beispiel einen Zustand Automatisierungslösung (Automatisierungslösung oder eine davon umfasste Funktionseinheit läuft oder läuft nicht oder ist aus anderen Gründen - Wartung oder dergleichen - nicht in Betrieb).

Daten zum Betriebszustand der Funktionseinheiten werden vorteilhaft in einer in der Cloud vorgehaltenen weiteren Datenbank (Asset-State-Datenbank) verfügbar gemacht und sind dann innerhalb der Cloud für die Ermittlung der Rangfolge der Gateways genau wie die Daten in der Asset-Meta-Datenbank verfügbar.

Bei einer weiteren Ausführungsform des Verfahrens erfolgt dessen Ausführung einerseits mittels eines Bewertungsdienstes (Criticality Ranking Service) sowie mittels eines Update-Service (Software Update Roll-out Service) jeweils in der Cloud. Mittels des Bewertungsdienstes (Criticality Ranking Service) erfolgt das Ermitteln der Rangfolge der Gateways. Mittels des Update-Service (Software Update Roll-out Service) erfolgt das Updaten eines Gateways oder einer Gruppe von Gateways, das Überprüfen des Erfolgs eines Updates sowie das Abbrechen des Updatens oder das Fortsetzen des Updatens abhängig vom Erfolg des bisherigen Updates. Dadurch sind die wesentlichen Funktionen des hier vorgeschlagenen Verfahrens voneinander getrennt. Dies erleichtert die Implementation des Verfahrens in Software und die Wartung eines resultierenden Computerprogramms.

Die eingangs genannte Aufgabe wird auch mittels einer als Knotenrechner in der Cloud fungierenden Verarbeitungseinheit oder dergleichen gelöst, indem diese Mittel zur Ausführung des hier und im Folgenden beschriebenen Verfahrens umfasst. Die Erfindung ist bevorzugt in Software implementiert. Die Erfindung ist damit einerseits auch ein Computerprogramm mit durch einen Computer in Form der Verarbeitungseinheit ausführbaren Programmcodeanweisungen und andererseits ein Speichermedium mit einem derartigen Computerprogramm, also ein Computerprogrammprodukt mit Programmcodemitteln, sowie schließlich auch eine Verarbeitungseinheit, in deren Speicher als Mittel zur Ausführung des Verfahrens und seiner Ausgestaltungen ein solches Computerprogramm geladen oder ladbar ist.

Für die weitere Beschreibung gilt zur Vermeidung unnötiger Wiederholungen, dass Merkmale und Details, die im Zusammenhang mit dem genannten Verfahren zur Softwareaktualisierung einer Mehrzahl von Cloud-Gateways sowie eventueller Ausgestaltungen beschrieben sind, selbstverständlich auch im Zusammenhang mit und im Hinblick auf die zur Ausführung des Verfahrens bestimmte und eingerichtete Verarbeitungseinheit und umgekehrt gelten, so dass die Verarbeitungseinheit auch entsprechend einzelner oder mehrerer Verfahrensmerkmale fortgebildet sein kann, indem die Verarbeitungseinheit Mittel zu deren Ausführung umfasst.

Das im Folgenden beschriebene Verfahren zur Softwareaktualisierung einer Mehrzahl von Cloud-Gateways ist zur automatischen Ausführung in Form eines Computerprogramms, ggf. auch in Form eines verteilten Computerprogramms, implementiert. Das Computerprogramm ist zur Ausführung zum Beispiel durch eine als Knotenrechner in der Cloud fungierende Verarbeitungseinheit bestimmt. Wenn im Folgenden Verfahrensschritte oder Verfahrensschrittfolgen beschrieben werden, bezieht sich dies auf Aktionen, die automatisch und ohne Eingriff eines Benutzers aufgrund des Computerprogramms oder unter Kontrolle des Computerprogramms erfolgen. Zumindest bedeutet jede Verwendung des Begriffs "automatisch", dass die betreffende Aktion aufgrund des Computerprogramms oder unter Kontrolle des Computerprogramms erfolgt.

Für den Fachmann ist selbstverständlich, dass anstelle einer Implementation des hier vorgeschlagenen Verfahrens in Software genauso auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1    die sogenannte Cloud mit daran angeschlossenen Cloud-Gateways und wiederum daran angeschlossenen und über die Cloud-Gateways mit der Cloud und zum Beispiel einer dort vorgehaltenen Cloud-Plattform mit IIoT-Diensten verbundenen Automatisierungslösungen,

FIG 2    eine schematisch vereinfachte Darstellung als Basis für eine Erläuterung des hier vorgeschlagenen Verfahrens zur Softwareaktualisierung einer Gruppe von Cloud-Gateways und

FIG 3    eine schematisch vereinfachte Darstellung des hier vorgeschlagenen Verfahrens in Form eines Flussdiagramms als Basis für ein Computerprogramm mit einer Implementation des Verfahrens.

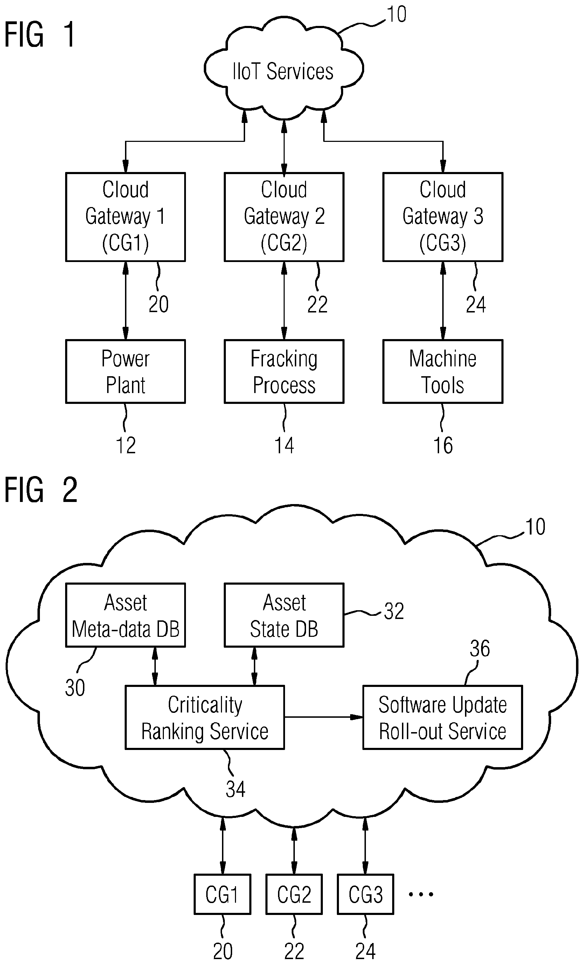

Die Darstellung in FIG 1 zeigt zur Veranschaulichung der Problematik in schematisch vereinfachter Form die Cloud 10 mit darin vorgehaltenen IIoT-Diensten (IIoT Services) sowie angeschlossenen Automatisierungslösungen 12, 14, 16 zur Steuerung und/oder Überwachung eines technischen Prozesses. Bei den Automatisierungslösungen 12-16 kann es sich um unterschiedlich kritische Automatisierungslösungen 12-16 handeln. Dafür sind in der Darstellung in FIG 1 schematisch vereinfacht Beispiele gezeigt. Demnach handelt es sich bei einer ersten Automatisierungslösung 12 um eine Automatisierungslösung für eine Energieerzeugungsanlage (Power Plant) mit einer kritischen Turbine, bei einer zweiten Automatisierungslösung 14 um eine Automatisierungslösung für einen sogenannten Fracking-Prozess zur Öl- oder Gasgewinnung (Fracking Process) und bei einer dritten Automatisierungslösung 16 um eine Automatisierungslösung für einen Fertigungsprozess mit zum Beispiel einer CNC-Maschine (Machine Tools). Jede Automatisierungslösung 12-16 ist über zumindest ein eigenes Cloud-Gateway 20, 22, 24 mit der Cloud 10 verbunden.

Bisher ist die Aktualisierung der Systemsoftware von als Cloud-Gateway 20-24 fungierenden Geräten - im Folgenden kurz nur als Gateway 20-24 bezeichnet - ohne Betrachtung der jeweils angeschlossenen Automatisierungslösungen 12-16 erfolgt. Es ist leicht vorstellbar, dass bei einem Fehler bei einer solchen Aktualisierung - im Folgenden kurz als Update bezeichnet - die Auswirkungen in einem Fertigungsprozess (dritte Automatisierungslösung 16) grundsätzlich weniger kritisch sind als die Auswirkungen in einer Energieerzeugungsanlage mit einer kritischen Turbine (erste Automatisierungslösung 12). Wenn, wie bisher, bei einer Verfügbarkeit eines Updates für Gateways 20-24 das Update gleichzeitig bei allen an die Cloud 10 angeschlossenen Gateways 20-24 oder einer Gruppe von an die Cloud 10 angeschlossenen Gateways 20-24 eingespielt wird, droht im Fehlerfalle eine Fehlfunktion nicht nur in der weniger kritischen dritten Automatisierungslösung 16, sondern auch in der besonders kritischen ersten Automatisierungslösung 12.

Dies wird mit dem hier vorgestellten Ansatz vermieden, indem beim Update einzelner Gateways 20-24 in einer Gruppe von Gateways 20-24 eine Rangfolge der an diese jeweils angeschlossenen Automatisierungslösungen 12-14 ermittelt und berücksichtigt wird. Die ermittelte Rangfolge drückt die potenzielle Gefahr aus (Criticality), die mit einem Ausfall oder einer Fehlfunktion der jeweiligen Automatisierungslösung 12-16 einhergeht. Das für die Rangfolge ausschlaggebende Bewertungskriterium wird im Folgenden als Gefahrenpotenzial (Criticality) bezeichnet.

Für die Ermittlung des Gefahrenpotenzials wird ausgenutzt, dass die im Rahmen einer Automatisierungslösung 12-16 an ein Gateway 20-24 angeschlossenen und im Folgenden mitunter auch als Assets bezeichneten Funktionseinheiten, insbesondere Funktionseinheiten der eingangs genannten Art, jeweils eine eindeutige Kennzeichnung (Asset-ID; zum Beispiel A1, A2, A3 usw.) besitzen. Genauso haben die Gateways 20-22 eine eindeutige Kennzeichnungen (Gateway-ID; zum Beispiel G1, G2, G3 usw.). In einer als Asset-Meta-Datenbank fungierenden Datenbank 30 (FIG 2) sind innerhalb der Cloud 10 Daten zu jeder mittels eines Gateways 20-24 an die Cloud 10 angeschlossenen Funktionseinheit (Asset) gespeichert. Diese Daten umfassen eine Kodierung eines mit der jeweiligen Funktionseinheit (Asset) einhergehenden Gefahrenpotenzials (Criticality), wobei dies zum Beispiel als Schätzwert durch den Betreiber der jeweiligen Funktionseinheit oder den Entwickler der Automatisierungslösung 12-16, zu der die Funktionseinheit gehört, angegeben wird. Die Daten umfassen des Weiteren optional eine Kodierung der Funktion der jeweiligen Funktionseinheit und machen damit zum Beispiel automatisch erfassbar, ob eine Funktionseinheit als Sensor, Aktor, Regler usw. fungiert. Schließlich umfassen die Daten optional Angaben zum Hersteller, zum Modell und/oder zu einer aktuellen Softwareversion der Funktionseinheit und dergleichen. Diese Daten (Meta-Daten) werden zum Beispiel bei der Konfiguration der einzelnen Funktionseinheiten, bei deren Anschluss an das jeweilige Gateway 20-24 oder bei der Inbetriebnahme der Automatisierungslösung 12-16 vergeben und in der Datenbank 30 innerhalb der Cloud 10 in einer unter der jeweiligen Asset-ID abrufbaren Art und Weise abgelegt.

Eine grundsätzlich optionale und als Asset-Zustands-Datenbank (Asset State DB) fungierende weitere Datenbank 32 (FIG 2) umfasst unter der jeweiligen Asset-ID eine Kodierung eines Betriebszustands der jeweiligen Funktionseinheit. Als insoweit erfasste Zustände kommen zum Beispiel Betriebszustände wie "laufend" (running), "wartend" (waiting), "Wartung" (under Maintenance) etc. in Betracht.

Auf Basis der Daten in der Datenbank 30 oder optional auf Basis der Daten in der Datenbank 30 und der weiteren Datenbank 32 erfolgt die Bewertung des Gefahrenpotenzials der einzelnen Automatisierungslösungen 12-16 und die Ermittlung einer Rangfolge der Gateways 20-24. Dafür zeigt die Darstellung in FIG 2 die erwähnten Datenbanken 30, 32, die Gateways 20-24, mittels derer die Automatisierungslösungen 12-16 (FIG 1) an die Cloud 10 angeschlossen sind, sowie einen Bewertungsdienst 34 (Criticality Ranking Service) und einen Update-Service (Software Update Rollout Service) 36.

Mittels des in der Cloud 10 vorgehaltenen Bewertungsdienstes 34 erfolgt die Ermittlung der Rangfolge der Gateways 20-24. Dafür greift der Bewertungsdienst 34 auf die Datenbank 30 (Asset Meta-data DB) oder optional auf die Datenbank 30 (Asset Meta-data DB) und auf die weitere Datenbank 32 (Asset State DB) zu und ermittelt für alle angeschlossenen Gateways 20-24 für die wiederum daran angeschlossenen Funktionseinheiten (Assets) das Gefahrenpotenzial der jeweiligen Automatisierungslösung 12-16. Dabei wird zum Beispiel zunächst für jedes Gateway 20-24 das Gefahrenpotenzial (Criticality Score) jeder einzelnen daran angeschlossenen Funktionseinheit (Asset) als Funktion zumindest eines Datums oder mehrerer für die jeweilige Funktionseinheit in der Datenbank 30 (Asset Meta-data DB) hinterlegter Daten ermittelt:

$$\texttt{Criticality Score(A1) = f(d1..dn),}$$

wobei d1 bis dn für in der Datenbank 30 (Asset Meta-data DB) verfügbare Daten steht, zum Beispiel für den Schätzwert für das mit einer Funktionseinheit (Asset) einhergehende Gefahrenpotenzial (Vendor criticality estimate). In einem weiteren Schritt wird aus dem so ermittelten Gefahrenpotenzial der einzelnen an ein Gateway 20-24 angeschlossenen Funktionseinheiten (Assets) das Gefahrenpotenzial der an das jeweilige Gateway 20-24 angeschlossenen Automatisierungslösung 12-16 ermittelt. Für die Ermittlung des Gefahrenpotenzials jeweils eines Gateways (CG1, CG2, CG3, ...) 20-24 kommt dabei zum Beispiel die Bildung einer Summe der für die daran angeschlossenen Funktionseinheiten (Assets) ermittelten Gefahrenpotenziale in Betracht:

$$\texttt{Criticality Score(CGx) =}$$
$$\texttt{Criticality Score(A1(CGx))}$$
$$\texttt{+ Criticality Score(A2(CGx)) + ...}$$

Damit steht eine automatisch verarbeitbare, insbesondere numerische Kodierung des Gefahrenpotenzials jedes einzelnen Gateways 20-24 zur Verfügung. Auf dieser Basis erfolgt eine Ermittlung einer Rangfolge der Gateways 20-24. Auf Basis dieser Rangfolge erfolgt schließlich das Updaten der Gateways 20-24 mittels des Update-Service 36 und zwar entsprechend der ermittelten Rangfolge derart, dass das Update zuerst bei dem Gateway 20-24 mit dem niedrigsten ermittelten Gefahrenpotenzial und zuletzt bei dem Gateway 20-24 mit dem höchsten ermittelten Gefahrenpotenzial erfolgt. Für Gateways 20-24 mit einem zwischen dem niedrigsten ermittelten Gefahrenpotenzial und dem höchsten ermittelten Gefahrenpotenzial liegenden Gefahrenpotenzial erfolgt das Update in der Reihenfolge der ermittelten Gefahrenpotenziale.

Optional kann bei der Ermittlung der Rangfolge der Gateways 20-24 eine Gruppierung erfolgen, zum Beispiel derart, dass Gateways 20-24 mit einem besonders niedrigen Gefahrenpotenzial einer ersten Gruppe, Gateways 20-24 mit einem mittleren Gefahrenpotenzial einer zweiten Gruppe und Gateways 20-24 mit einem besonders hohen Gefahrenpotenzial einer dritten Gruppe zugeordnet werden, wobei das Update mittels des Update-Service 36 zuerst und gleichzeitig oder quasi-gleichzeitig für die Gateways 20-24 der ersten Gruppe, danach und gleichzeitig oder quasi-gleichzeitig für die Gateways 20-24 der zweiten Gruppe und wiederum danach und gleichzeitig oder quasi-gleichzeitig für die Gateways 20-24 der dritten Gruppe erfolgt.

Die Funktion des Update-Service 36 beschränkt sich dabei nicht auf das Herunterladen und Einspielen eines Updates auf ein Gateway 20-24 oder die Gateways 20-24, sondern umfasst vor allem auch eine Kontrolle des Update-Verlaufs. Das Update wird nämlich nach einem Update für ein Gateway 20-24 oder eine Gruppe von Gateways 20-24 nur dann entsprechend der ermittelten Rangfolge fortgesetzt, wenn das Update erfolgreich war. Dies gewährleistet, dass bei einem fehlgeschlagenen oder fehlerhaften Update nur ein Gateway 20-24 oder Gateways 20-24 mit einem niedrigen Gefahrenpotenzial und einer entsprechenden Position in der Rangfolge betroffen ist bzw. sind. Gateways 20-24 mit einem höheren Gefahrenpotenzial sind nicht betroffen und die darüber mit der Cloud 10 verbundenen Automatisierungslösungen 12-16 werden weiterhin ausgeführt.

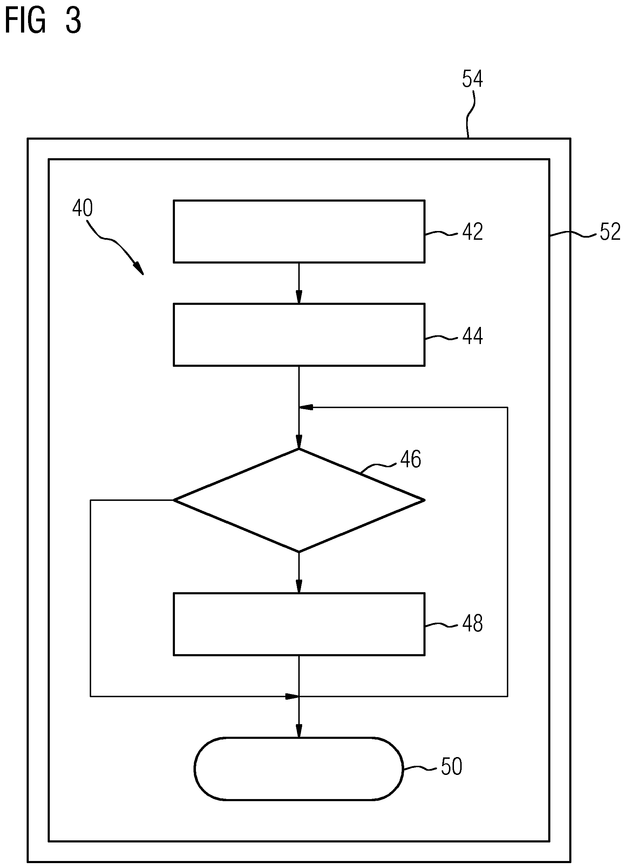

Im Einzelnen umfasst das hier vorgeschlagene Verfahren zur Softwareaktualisierung (Update) von Cloud-Gateways (Gateways) 20-24, wobei über die Gateways 20-24 Automatisierungslösungen 12-16 an die sogenannte Cloud 10 angeschlossen sind, insbesondere an eine in der Cloud 10 vorgehaltene Cloud-Plattform, die folgenden in der Darstellung in FIG 3 als Beispiel für eine Implementation des Verfahrens in Software (Computerprogramm 40) in Form eines Flussdiagramms gezeigten Schritte:

Zunächst wird in einem ersten Schritt 42 die Rangfolge der Gateways 20-24 entsprechend einem Gefahrenpotenzial der oder jeder an jedes Gateway 20-24 angeschlossenen Automatisierungslösung 12-16 ermittelt. Dies erfolgt mittels des in der Cloud 10 vorgehaltenen, insbesondere zur der jeweiligen Cloud-Plattform gehörenden, Bewertungsdienstes 34. Die Funktion des Bewertungsdienstes 34 umfasst dabei zum Beispiel die oben beschriebenen Funktionen.

Mit der aus dem ersten Schritt 42 feststehenden Rangfolge der Gateways 20-24 wird in einem zweiten Schritt 44 ein Updaten eines Gateways 20-24 oder einer Gruppe von Gateways 20-24 mit dem geringsten Gefahrenpotenzial versucht.

In einem dritten Schritt 46 - genauer bei der ersten Ausführung des dritten Schritts 46 - wird der Erfolg des im vorangehenden zweiten Schritt 44 erfolgten Updates überprüft. Dies erfolgt zum Beispiel anhand einer automatischen Prüfung von Protokolldateien und/oder einer Lebenszeichenüberwachung des oder jedes von dem Update betroffenen Gateways 20-24. Abhängig vom Ergebnis der Überprüfung im dritten Schritt 46 wird das Updaten abgebrochen oder zu einem vierten Schritt 48 verzweigt. Das Updaten wird abgebrochen (Verzweigung zum Programmende 50), wenn sich bei der Überprüfung im dritten Schritt 46 ergeben hat, dass das vorangehende Update (zweiter Schritt 44) nicht fehlerfrei erfolgt ist. Das Updaten wird mit dem vierten Schritt 48 fortgesetzt, wenn sich bei der Überprüfung im dritten Schritt 46 ergeben hat, dass das vorangehende Update (zweiter Schritt 44) fehlerfrei erfolgt ist.

Im vierten Schritt 48 wird das Updaten mit einem Gateway 20-24 oder einer Gruppe von Gateways 20-24 mit dem im Vergleich zum vorangehenden Update nächsthöheren Gefahrenpotenzial fortgesetzt.

Danach wird so lange zum dritten Schritt 46 zurückverzweigt und dabei jeweils geprüft, ob das vorangehende Update (Schritt 48) erfolgreich oder nicht erfolgreich war, bis das Update auch für das Gateway 20-24 oder eine Gruppe von Gateways 20-24 mit dem höchsten Gefahrenpotenzial erfolgt ist. Wenn das Update für das Gateway 20-24 oder eine Gruppe von Gateways 20-24 mit dem höchsten Gefahrenpotenzial erfolgt ist, endet (Programmende 50) das Verfahren und die Softwareaktualisierung für die Gateways 20-24 ist abgeschlossen. Wenn während des Verfahrens festgestellt wird (dritter Schritt 46), dass ein Update bei einem Gateway 20-24 oder einer Gruppe von Gateways 20-24 nicht erfolgreich war, wird das Verfahren sofort abgebrochen. Die Funktionsfähigkeit des oder jedes Gateway 20-24, das von dem oder den bis dahin erfolgten Updates nicht betroffen ist, ist weiterhin gegeben. Weil die Updates entsprechend der zuvor ermittelten Rangfolge und damit entsprechend dem jedem Gateway 20-24 zugeordneten Gefahrenpotenzial erfolgen, ist gewährleistet, dass Gateways 20-24 mit hohem Gefahrenpotenzial nur dann upgedated werden, wenn das Update bereits für zumindest ein Gateway 20-24 mit niedrigerem Gefahrenpotenzial erfolgreich ausgeführt wurde und demgemäß davon ausgegangen werden kann, dass auch alle weiteren Updates erfolgreich durchführbar sein werden.

Wie dies in FIG 3 schematisch vereinfacht gezeigt ist, ist das Computerprogramm 40 mit einer Implementation des hier vorgestellten Verfahrens und gegebenenfalls einzelner oder mehrerer Ausführungsformen in einen Speicher 52 einer Verarbeitungseinheit 54, zum Beispiel einer als Rechnerknoten in der Cloud 10 fungierenden Verarbeitungseinheit 54, geladen und wird beim Betrieb der Verarbeitungseinheit 54 zur Softwareaktualisierung (Update) einer Mehrzahl von Cloud-Gateways 20-24 ausgeführt.

Bisher wurde vorausgesetzt, dass jede Automatisierungslösung 12-16 über genau ein eigenes oder zumindest ein eigenes Cloud-Gateway 20-24 mit der Cloud 10 verbunden ist. Mit dem hier vorgeschlagenen Ansatz ist selbstverständlich auch eine Situation handhabbar, bei der über ein Cloud-Gateway 20-24 mehrere Automatisierungslösungen 12-16 mit der Cloud 10 verbunden sind. Dann kommt zum Beispiel in Betracht, für das betreffende Gateway 20-24 die Gefahrenpotenziale der einzelnen darüber mit der Cloud 10 verbundenen Automatisierungslösungen 12-16 zu ermitteln und bei der Bestimmung der Rangfolge des jeweiligen Gateways 20-24 nur das höchste ermittelte Gefahrenpotenzial zu berücksichtigen.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird ein Verfahren zur Softwareaktualisierung (Update) einer Mehrzahl von Cloud-Gateways 20-24, wobei über die Cloud-Gateways 20-24 Automatisierungslösungen 12-16 an die Cloud 10 angeschlossen sind. Das Verfahren basiert auf einer zunächst erfolgenden Ermittlung einer Rangfolge der Cloud-Gateways 20-24 entsprechend einem Gefahrenpotenzial der angeschlossenen Automatisierungslösungen 12-16. Aus der Rangfolge ergibt sich die Reihenfolge des Updatens. Danach beginnt das Updaten mit dem Cloud-Gateway 20-24 oder einer Gruppe von Cloud-Gateways 20-24 mit dem geringsten Gefahrenpotenzial. Anschließend wird der Erfolg des im vorangehenden Schritt erfolgten Updates überprüft, bevor das Updaten fortgesetzt wird. Wenn in dem Schritt zum Überprüfen des Erfolgs des vorangehenden Updates ermittelt wurde, dass das Update fehlerfrei erfolgt ist, wird das Updaten mit einem Cloud-Gateway 20-24 oder einer Gruppe von Cloud-Gateways 20-24 mit dem nächsthöheren Gefahrenpotenzial fortgesetzt. Wenn dagegen in dem Schritt zum Überprüfen des Erfolgs des vorangehenden Updates ermittelt wurde, dass das Update nicht fehlerfrei erfolgt ist, wird das Updaten insgesamt abgebrochen. Ansonsten werden die Schritte des Überprüfens des Erfolgs des vorangehenden Updates und des Fortsetzen des Updatens so lange wiederholt, bis das Update auch für das Cloud-Gateway 20-24 oder eine Gruppe von Cloud-Gateways 20-24 mit dem höchsten Gefahrenpotenzial erfolgt ist.

**Patentansprüche**

1.  Verfahren zur Softwareaktualisierung einer Mehrzahl von Cloud-Gateways (20-24), über welche Automatisierungslösungen (12-16) an die sogenannte Cloud (10) angeschlossen sind,
    mit folgenden Schritten:

Ermitteln einer Rangfolge der Cloud-Gateways (20-24) entsprechend einem Gefahrenpotenzial der oder jeder an jedes Cloud-Gateway (20-24) angeschlossenen Automatisierungslösung (12-16) ;

Updaten des Cloud-Gateways (20-24) oder einer Gruppe von Cloud-Gateways (20-24) mit dem geringsten Gefahrenpotenzial;

Überprüfen des Erfolgs des im vorangehenden Schritt erfolgten Updates;

Fortsetzen des Updatens mit einem Cloud-Gateway (20-24) oder einer Gruppe von Cloud-Gateways (20-24) mit dem nächsthöheren Gefahrenpotenzial, wenn in dem Schritt zum Überprüfen des Erfolgs des vorangehenden Updates ermittelt wurde, dass das Update fehlerfrei erfolgt ist, oder Abbrechen des Updatens, wenn in dem Schritt zum Überprüfen des Erfolgs des vorangehenden Updates ermittelt wurde, dass das Update nicht fehlerfrei erfolgt ist, und

Wiederholen des Schritts des Fortsetzens des Updatens und des Überprüfens des Erfolgs des vorangehenden Updates so lange, bis das Update auch für das Cloud-Gateway (20-24) oder eine Gruppe von Cloud-Gateways (20-24) mit dem höchsten Gefahrenpotenzial erfolgt ist.

2. Verfahren nach Anspruch 1, wobei beim Ermitteln einer Rangfolge der Cloud-Gateways (20-24) entsprechend einem Gefahrenpotenzial der oder jeder an die Cloud-Gateways (20-24) angeschlossenen Automatisierungslösung (12-16) ein Gefahrenpotenzial von zu einer Automatisierungslösung (12-16) gehörenden Funktionseinheiten berücksichtigt wird und deren Gefahrenpotenzial wiederum anhand von vorgegebenen oder vorgebbaren und in einer in der Cloud (10) vorgehaltenen Datenbank (30) ermittelt wird.

3. Verfahren nach Anspruch 2, wobei zu den Daten in der Datenbank (30) ein Schätzwert bezüglich des Gefahrenpotenzials der jeweiligen Funktionseinheit gehört.

4. Verfahren nach Anspruch 2 oder 3, wobei beim Ermitteln einer Rangfolge der Cloud-Gateways (20-24) entsprechend einem Gefahrenpotenzial der oder jeder an die Cloud-Gateways (20-24) angeschlossenen Automatisierungslösung (12-16) ein Betriebszustand der zu einer Automatisierungslösung (12-16) gehörenden Funktionseinheiten berücksichtigt wird.

5. Verfahren nach Anspruch 4, wobei Daten zum Betriebszustand der Funktionseinheiten in einer in der Cloud (10) vorgehaltenen weiteren Datenbank (32) verfügbar gemacht sind.

6. Verfahren nach einem der vorangehenden Ansprüche,
wobei das Ermitteln einer Rangfolge der Cloud-Gateways (20-24) mittels eines Bewertungsdienstes (34) in der Cloud (10) erfolgt und
wobei das Updaten eines Cloud-Gateways (20-24) oder einer Gruppe von Cloud-Gateways (20-24), das Überprüfen des Erfolgs eines Updates sowie das Abbrechen des Updatens oder das Fortsetzen des Updatens abhängig vom Erfolg des bisherigen Updates mittels eines Update-Service (36) in der Cloud (10) erfolgt.

7. Computerprogramm (40) mit Programmcodemitteln, um alle Schritte von jedem beliebigen der Ansprüche 1 bis 6 durchzuführen, wenn das Computerprogramm (40) auf einer als Rechnerknoten in der Cloud (10) fungierenden Verarbeitungseinheit (54) ausgeführt wird.

8. Computerprogrammprodukt mit Programmcodemitteln, die auf einem computerlesbaren Datenträger gespeichert sind, um das Verfahren nach jedem beliebigen der Ansprüche 1 bis 6 durchzuführen, wenn das Computerprogrammprodukt auf einer als Rechnerknoten in der Cloud (10) fungierenden Verarbeitungseinheit (54) ausgeführt wird.

9. Digitales Speichermedium mit elektronisch auslesbaren Steuersignalen, die so mit einer als Rechnerknoten in der Cloud (10) fungierenden Verarbeitungseinheit (54) zusammenwirken können, dass ein Verfahren nach einem der Ansprüche 1 bis 6 ausgeführt wird.

10. Verarbeitungseinheit (54) mit einem Speicher (52), in den ein Computerprogramm nach Anspruch 7 geladen ist, das beim Betrieb der Verarbeitungseinheit (54) zum Ausführen eines Verfahrens zur Softwareaktualisierung einer Mehrzahl von Cloud-Gateways (20-24) nach einem der Ansprüche 1 bis 6 ausgeführt wird.

FIG 1

FIG 2

FIG 3

**Europäisches Patentamt**
**European Patent Office**
**Office européen des brevets**

# EUROPÄISCHER RECHERCHENBERICHT

Nummer der Anmeldung

EP 16 20 2223

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | EP 2 660 667 A2 (ROCKWELL AUTOMATION TECH INC [US]) 6. November 2013 (2013-11-06)<br>* Zusammenfassung *<br>* Absatz [0068] *<br>----- | 1,2,6-10<br><br>3-5 | INV.<br>G05B19/418 |
| A | US 8 594 850 B1 (GOURLAY ALASTAIR ROBERT [US] ET AL) 26. November 2013 (2013-11-26)<br>* Anspruch 1 *<br>----- | 1-10 | |

RECHERCHIERTE SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| München | 1. Juni 2017 | Messelken, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 20 2223

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2017

| Im Recherchenbericht angeführtes Patentdokument | Datum der Veröffentlichung | Mitglied(er) der Patentfamilie | Datum der Veröffentlichung |
|---|---|---|---|
| EP 2660667 A2 | 06-11-2013 | KEINE | |
| US 8594850 B1 | 26-11-2013 | US 8594850 B1<br>US 2014096126 A1<br>US 2015074658 A1 | 26-11-2013<br>03-04-2014<br>12-03-2015 |

Für nähere Einzelheiten zu diesem Anhang : siehe Amtsblatt des Europäischen Patentamts, Nr.12/82

EPO FORM P0461